# EUROPÄISCHE PATENTANMELDUNG

(11) **EP 3 659 442 A1**
(43) Veröffentlichungstag der Anmeldung: **03.06.2020**
(21) Anmeldenummer: 19211760.4
(22) Anmeldetag: 27.11.2019
(51) Int. Cl.: A23K 10/20, A23K 10/30, A23K 20/189, A23K 50/40, A23K 50/48, A23K 10/14

(54) **FUTTERZUSAMMENSETZUNG UND HERSTELLUNGSVERFAHREN DESSELBEN**

(30) Priorität: 27.11.2018 DE 102018129926
(71) Anmelder: Tönnies Holding ApS & Co. KG, 33378 Rheda-Wiedenbrück (DE)
(72) Erfinder: SARIC, Krunoslav, 27283 Verden (DE)
(74) Vertreter: Cohausz & Florack

(57) **Zusammenfassung**

Dargestellt und beschrieben wird eine Futterzusammensetzung, insbesondere für Haustiere, enthaltend a) tierische Proteinquelle; b) Wasser; c) mindestens eine Protease; wobei die Futterzusammensetzung als Suspension vorliegt. Ferner werden ein Verfahren zur Herstellung der Futterzusammensetzung sowie die Verwendung der Futterzusammensetzung beschrieben.

## Beschreibung

Die vorliegende Erfindung betrifft eine Futterzusammensetzung, insbesondere für Haustiere, ein Verfahren zur Herstellung einer Futterzusammensetzung sowie die Verwendung einer Futterzusammensetzung als Ergänzungsfuttermittel oder als Alleinfuttermittel.

Futterzusammensetzungen sollen Tiere üblicherweise mit notwendigen Nährstoffen versorgen. Dabei gibt es unterschiedliche Arten von Futterzusammensetzungen. So gibt es Alleinfuttermittel und Ergänzungsfuttermittel. Unter Alleinfuttermittel wird dabei ein Mischfuttermittel, das wegen seiner Zusammensetzung für eine tägliche Ration ausreicht, verstanden. Unter Ergänzungsfuttermittel wird ein Mischfuttermittel verstanden, das einen hohen Gehalt an bestimmten Stoffen aufweist, aber aufgrund seiner Zusammensetzung nur mit anderen Futtermitteln zusammen für die tägliche Ration ausreicht. Soll eine Futterzusammensetzung als Alleinfuttermittel dienen, muss die Futterzusammensetzung strenge Anforderungen erfüllen, insbesondere hinsichtlich der Protein- und Fettgehalte sowie der enthaltenen Mineralstoffe, Vitamine und Spurenelemente. Futterzusammensetzungen sollten ferner gut bekömmlich sein.

Neben den Anforderungen an die Gehalte der Inhaltsstoffe sollte eine Futterzusammensetzung auch eine gute Akzeptanz bei den Tieren haben. Dadurch kann eine ausreichende Nahrungsaufnahme sichergestellt werden.

Einige Tiere, insbesondere Hunde, haben verschiedene Arten der Nahrungsaufnahme. So nehmen Hunde festes Futter häufig auf schlingende Weise ein. Beim Schlingen nimmt der Hund die Nahrung mit hoher Rate auf. Dadurch kann sich das Sättigungsgefühl erst später einstellen. Eine mögliche Folge ist Übergewicht als Ergebnis des späteren Sättigungsgefühls. Ferner gelangen große Nahrungsstücke in den Verdauungstrakt. Dadurch ist der Verdauungsaufwand größer, was sich in Verdauungsstörungen äußern kann. Schließlich kann eine Folge des Schlingens sein, dass die Nährstoffe nicht so gut resorbiert werden können.

Neben dem Schlingen können Nahrungsmittel und Wasser auch auf andere Arten von Tieren aufgenommen werden. Wasser wird von den meisten Tieren, beispielsweise Hunden, mit der Zunge in den Mund geschaufelt. Insbesondere Hunde können Nahrungsmittel auch durch Schlabbern aufnehmen. Beim Schlabbern werden die Nahrungsmittel nicht geschlungen und werden auf andere Weise als beim Trinken in den Mund befördert. Dickflüssige Nahrungsmittel können beispielsweise geschlabbert werden. Beim Schlabbern haben die Nahrungsmittel üblicherweise eine größere Kontaktzeit im Mund. Das Schlabbern ist insbesondere für Hunde ferner auch eine Abwechslung in der Art der Nahrungsaufnahme. Dies kann die Nahrungsaufnahme begünstigen.

Dickflüssige Zusammensetzungen liegen oft als Suspensionen vor. Die Stabilität von Suspensionen, insbesondere die Langzeitstabilität, kann schwierig zu gewährleisten sein. Gerade protein- oder peptidreiche Suspensionen können ausflocken. Diese sehen wenig ansprechend aus und können den Eindruck erwecken, nicht mehr genießbar zu sein. Jedoch ist es für Futterzusammensetzungen, insbesondere für fleischfressende Tiere wie Hunde, wichtig, dass diese einen hohen Peptidgehalt aufweisen, um eine ausreichende Versorgung mit Aminosäuren zu gewährleisten. Suspensionen haben ferner den Vorteil, dass ihre Inhaltsstoffe gut resorbiert werden können, insbesondere schon über die Mundschleimhaut.

Die US 4 391 829 A beschreibt ein Hundefutter enthaltend mehlige und fleischige Inhaltsstoffe, wobei die Schmackhaftigkeit dadurch verbessert werden soll, dass die mehligen Inhaltsstoffe mit einer Amylase und einer Protease verdaut und mit einem enzymatisch modifizierten proteinösen Material vermischt wird. Die in der US 4 391 829 A beschriebene Zusammensetzung wird als Feucht- oder Trockenfutter verwendet werden, Suspensionen sind nicht beschrieben.

US 2009/0028997 A1 beschreibt eine Zusammensetzung mit Antistress Wirkung und erhöhter Schmackhaftigkeit, in der mit einer Protease behandeltes Fleisch einer Grundzusammensetzung beigemischt wird. Die resultierenden Futterzusammensetzungen liegen nicht als Suspension vor.

Die WO 2013/89722 A1 beschreibt eine Futterzusammensetzung enthaltend Amylase mit weicher Konsistenz sowie ein Verfahren zu deren Herstellung. Die in der WO 2013/89722 A1 beschriebene Futterzusammensetzung liegt nicht als Suspension vor und enthält keine Protease.

Die WO 2017/177998 A1 beschreibt ein Protein-Getränk umfassend 3 bis 20 Gew.-% Proteine, 0,5 bis 5 Gew.-% Fett, 70 bis 95 Gew.-% Wasser und 0,5 bis 15 Gew.-% Kohlenhydrate. Das in der WO 2017/177998 A1 beschriebene Protein-Getränk enthält keine Protease.

Demnach bestand eine Aufgabe der Erfindung darin, eine Futterzusammensetzung bereitzustellen, die bei Tieren eine hohe Akzeptanz hat. Ferner sollten die in der Futterzusammensetzung enthaltenen Nährstoffe gut resorbiert werden können. Die Futterzusammensetzung sollte auch gut bekömmlich sein. Weitere Aufgaben ergeben sich aus den nachfolgenden Ausführungen und werden teilweise hiernach aufgeführt.

Diese Aufgaben können ganz oder teilweise durch die Futterzusammensetzung nach Anspruch 1, das Verfahren nach Anspruch 12, die Futterzusammensetzung nach Anspruch 23 sowie die Verwendung nach Anspruch 24 gelöst werden.

Die Erfindung stellt eine Futterzusammensetzung, insbesondere für Haustiere, bereit, enthaltend
a. tierische Proteinquelle;
b. Wasser;
c. mindestens eine Protease,
wobei die Futterzusammensetzung als Suspension vorliegt.

Die erfindungsgemäße Futterzusammensetzung zeichnet sich dadurch aus, dass sie die für eine ausgewogene Ernährung notwendigen Nährstoffe enthält. Ferner ist die Futterzusammensetzung gut bekömmlich, was auch darauf zurückzuführen ist, dass sie als Suspension vorliegt. Dadurch sind die enthaltenen Nährstoffe auch gut resorbierbar. Da die Futterzusammensetzung als Suspension vorliegt, kann sie von Tieren, insbesondere von Hunden, mittels Schlabbern aufgenommen werden. Dies führt insbesondere bei Hunden zu einer hohen Akzeptanz der Futterzusammensetzung. Aufgrund der Protease ist die Futterzusammensetzung, obwohl sie als Suspension vorliegt, über längere Zeiträume trotz hohem Peptidgehalt stabil. Ferner können aufgrund des Einsatzes von mindestens einer Protease verschiedene Fleischarten unmittelbar als tierische Proteinquelle eingesetzt werden und dabei eine gute Resorption der enthaltenen Peptide ermöglicht werden. Weiterhin kann die Suspension aufgrund der Einwirkung der Protease auch nach einem nachgelagerten Sterilisationsschritt stabil sein.

Vorteilhafte Ausgestaltungen sind in den Unteransprüchen beschrieben.

Unter einer Suspension wird vorzugsweise eine Mischung verstanden, in der Teilchen eines oder mehrerer Feststoffe in einer Flüssigkeit fein verteilt sind. Die Teilchen können sich beim Stehenlassen der Suspension im Laufe der Zeit am Boden absetzen.

Die Erfindung stellt vorzugsweise eine Futterzusammensetzung, insbesondere für Haustiere, bereit, enthaltend
a. tierische Proteinquelle;
b. Wasser;
c. mindestens eine Protease;
d. pflanzliches Nahrungsmittel,
wobei die Futterzusammensetzung als Suspension vorliegt.

Vorteilhafterweise enthält die Futterzusammensetzung 40 Gew.-% oder mehr, bezogen auf das Gesamtgewicht der Zusammensetzung, an tierischer Proteinquelle. Vorzugsweise enthält die Futterzusammensetzung 40 bis 80 Gew.-%, bevorzugt 45 bis 75 Gew.-%, weiter bevorzugt 45 bis 70 Gew.-%, am bevorzugtesten 45 bis 65 Gew.-%, jeweils bezogen auf das Gesamtgewicht der Zusammensetzung, an tierischer Proteinquelle. Gemäß einer weiteren Ausführungsform enthält die Futterzusammensetzung 40 bis 80 Gew.-%, bevorzugt 50 bis 75 Gew.-%, weiter bevorzugt 55 bis 75 Gew.-%, weiter bevorzugt 55 bis 70 Gew.-%, weiter bevorzugt 60 bis 70 Gew.-%, am bevorzugtesten 60 bis 65 Gew.-%, bezogen auf das Gesamtgewicht der Zusammensetzung, an tierischer Proteinquelle. Gehalte von 40 Gew.-% und mehr an tierischer Proteinquelle sind gerade bei Vorliegen der Zusammensetzung als Suspensionen schwer zu erreichen. Gleichzeitig ist eine ausreichende Zufuhr an Proteinen insbesondere für fleischfressende Tiere, insbesondere für Hunde, aber wertvoll. Die Proteine der tierischen Proteinquelle sind dabei bevorzugt gespalten, insbesondere durch Einwirkung der Protease. Die Futterzusammensetzung kann eine oder mehr als eine tierische Proteinquelle enthalten. Enthält die Futterzusammensetzung mehr als eine tierische Proteinquelle, so tragen alle tierischen Proteinquellen zusammen zu den vorgenannten Gehalten bei. Nachstehende Ausführungen zur tierischen Proteinquelle gelten vorzugsweise für alle eingesetzten tierischen Proteinquellen. Gehalte von mehr als 80 Gew.-% an tierischer Proteinquelle können zu einer unausgewogenen Ernährung führen.

Tierische Proteinquellen haben gegenüber pflanzlichen Proteinquellen den Vorteil, dass insbesondere Fleischfresser wie Hunde eine Proteinzusammensetzung erhalten, die der natürlichen und artgerechten Ernährung eines Hundes entspricht.

Als tierische Proteinquelle kommen verschiedene Proteinquellen in Betracht. Vorzugsweise ist die tierische Proteinquelle ausgewählt aus der Gruppe bestehend aus Fleisch, Fleischnebenprodukten, Fischfleisch, Molkereiprodukte und Mischungen davon, weiter bevorzugt ausgewählt aus der Gruppe bestehend aus Fleisch, Fleischnebenprodukten, Fischfleisch und Mischungen davon, am bevorzugtesten ausgewählt aus der Gruppe bestehend aus Fleisch, Fleischnebenprodukten und Mischungen davon. Fleisch umfasst beispielsweise Fleisch von Geflügel, Säugetieren wie Rinder, Schweine, Schafe und Ziegen. Fleisch umfasst dabei sowohl Muskelfleisch als auch separiertes Fleisch. Fleischnebenprodukte sind beispielsweise Lungen, Nieren, Herzen, Leber und Magen.

Die Futterzusammensetzung enthält vorteilhafterweise ferner pflanzliches Nahrungsmittel. Vorzugsweise enthält die Futterzusammensetzung 5 bis 20 Gew.-%, bevorzugt 7 bis 18 Gew-%, weiter bevorzugt 10 bis 16 Gew.-%, jeweils bezogen auf das Gesamtgewicht der Zusammensetzung, pflanzliches Nahrungsmittel. Die Futterzusammensetzung kann ein oder mehr als ein pflanzliches Nahrungsmittel enthalten. Enthält die Futterzusammensetzung mehr als ein pflanzliches Nahrungsmittel, so tragen alle pflanzlichen Nahrungsmittel zusammen zu den vorgenannten Gehalten bei. Nachstehende Ausführungen zum pflanzlichen Nahrungsmittel gelten vorzugsweise für alle eingesetzten pflanzlichen Nahrungsmittel. Auf diese Weise kann eine ausgewogene Ernährung ermöglicht werden.

Das pflanzliche Nahrungsmittel umfasst zweckmäßigerweise Obst und/oder Gemüse oder besteht daraus. Pflanzliche Nahrungsmittel liefern beispielsweise Kohlenhydrate und Ballaststoffe. Als pflanzliches Nahrungsmittel kommen insbesondere Reis, Weizen, Mais, Gerste, Apfel, Aprikose, Pfirsich, Banane, Mango, Cranberry, Heidelbeere, Johannisbeere, Hagebutten, Kürbis, Rote Beete, Karotte, Pastinake, Spinat, Brokkoli, Wirsing, Süßkartoffel, Rübenschnitzel, Chicoreewurzeln, Hafer, Erbsen, Kleie, grüne Bohnen, Blumenkohl, Gemüseschalen, Sojafasern oder Mischungen davon in Frage. Vorzugsweise ist das pflanzliche Nahrungsmittel ausgewählt aus der Gruppe bestehend aus Obst und Gemüse, insbesondere aus der Gruppe bestehend aus Apfel, Aprikose, Pfirsich, Banane, Mango, Cranberry, Heidelbeere, Johannisbeere, Kürbis, Rote Beete, Karotte, Pastinake, Spinat, Brokkoli, Wirsing, Süßkartoffel und Mischungen davon.

Die Futterzusammensetzung enthält ferner Wasser. Vorzugsweise enthält die Futterzusammensetzung 5 bis 45 Gew.-%, bevorzugt 10 bis 45 Gew.-%, weiter bevorzugt 15 bis 45 Gew.-%, weiter bevorzugt 20 bis 40 Gew.-%, weiter bevorzugt 25 bis 35 Gew.-%, jeweils bezogen auf das Gesamtgewicht der Zusammensetzung, Wasser. Durch den Wassergehalt kann die Viskosität der Futterzusammensetzung eingestellt werden. Die angegebene Menge an Wasser bezieht sich insbesondere auf das zugegebene Wasser. Das Wasser kann direkt zugegeben werden und/oder es kann in Form von Kondensat der Zusammensetzung zugesetzt werden, beispielsweise bei Heizen mittels Dampf. Wasser, das beispielsweise in tierischen Proteinquellen oder in pflanzlichen Nahrungsmitteln enthalten ist, wird insbesondere nicht zu der angegebenen Menge an Wasser dazugerechnet.

Die Futterzusammensetzung enthält weiterhin mindestens eine Protease. Proteasen können auch als Peptidasen bezeichnet werden. Protease kann in unterschiedlichen Mengen in der Futterzusammensetzung enthalten sein. Vorzugsweise enthält die Futterzusammensetzung 0,05 bis 3 Gew.-%, insbesondere 0,1 bis 2 Gew.-% oder 0,2 bis 1,5 Gew.-%, jeweils bezogen auf das Gesamtgewicht der Zusammensetzung, Protease. Die Mengenangaben beziehen sich dabei auf die Gesamtmenge aller in der Futterzusammensetzung enthaltenen Proteasen. Die Futterzusammensetzung kann also eine Protease in den vorgenannten Mengen enthalten oder sie kann zwei oder mehr Proteasen enthalten, die zusammen in den vorgenannten Mengen enthalten sind. Versuche haben gezeigt, dass die Zugabe von Protease in diesen Mengen vorteilhaft für die Herstellung einer Futterzusammensetzung in Form einer stabilen Suspension ist, insbesondere bei nachfolgender Sterilisation der Futterzusammensetzung.

Die Futterzusammensetzung enthält mindestens eine Protease. Vorzugsweise enthält die Futterzusammensetzung mindestens zwei Proteasen, weiter bevorzugt genau zwei Proteasen. Die Futterzusammensetzung kann aber auch drei oder mehr Proteasen enthalten.

Die in der Futterzusammensetzung vorliegende(n) Protease(n) kann insbesondere inaktiviert sein. Eine Inaktivierung kann beispielsweise durch Erhitzen auf eine bestimmte Temperatur erreicht werden. Vorzugsweise erfolgt im Zuge der Inaktivierung eine Denaturierung der Protease(n). Bei der Herstellung der erfindungsgemäßen Futterzusammensetzung wird bevorzugt aktive Protease(n) zugegeben.

Verschiedene Proteasen haben bei unterschiedlichen Bedingungen, beispielsweise bei unterschiedlichen pH-Werten, ihre maximale Aktivität. Manche Proteasen haben beispielsweise in saurem Milieu ihr Aktivitätsmaximum, andere in neutralem oder in alkalischem Milieu. Unter Bedingungen, die von den optimalen Bedingungen abweichen, zeigen Proteasen üblicherweise eine verringerte Aktivität. Gemäß einer Ausführungsform enthält die Futterzusammensetzung mindestens eine Protease, die bei einem pH von 6 bis 9 aktiv ist. Bevorzugt weist die Protease gemäß dieser Ausführungsform ihr Aktivitätsmaximum bei einem pH von 7 bis 8 auf. Gemäß einer weiteren Ausführungsform enthält die Futterzusammensetzung mindestens eine Protease, die bei einem pH von 4 bis 9 aktiv ist. Bevorzugt weist die Protease gemäß dieser Ausführungsform ihr Aktivitätsmaximum bei einem pH von 6 bis 7 auf. Gemäß einer weiteren Ausführungsform enthält die Futterzusammensetzung mindestens eine Protease, die bei einem pH von 6 bis 9 aktiv ist, bevorzugt ihr Aktivitätsmaximum bei einem pH von 7 bis 8 aufweist, und mindestens eine Protease, die bei einem pH von 4 bis 9 aktiv ist, bevorzugt ihr Aktivitätsmaximum bei einem pH von 7 bis 8 aufweist.

Versuche haben gezeigt, dass sowohl mit Proteasen, die im neutralen pH-Bereich aktiv sind, als auch mit Proteasen, die im sauren pH-Bereich aktiv sind, sowie mit Kombinationen davon eine Futterzusammensetzung in Form einer Suspension, die stabil ist, erhalten werden kann. Vorteilhafterweise enthält die Futterzusammensetzung eine Protease, die bei einem pH von 6 bis 9 aktiv ist, bevorzugt ihr Aktivitätsmaximum bei einem pH von 7 bis 8 aufweist. Es wurde gefunden, dass mit einer Protease, die bei einem pH von 6 bis 9 aktiv ist, bevorzugt ihr Aktivitätsmaximum bei einem pH von 7 bis 8 aufweist, oder zusätzlich mit einer Protease, die bei einem pH von 4 bis 9 aktiv ist, bevorzugt ihre Aktivitätsmaximum bei einem pH von 6 bis 7 aufweist, ein bitterer Beigeschmack der Futterzusammensetzung vermieden werden kann. Insbesondere bei hohen Gehalten an tierischer Proteinquelle konnte durch die Kombination der beiden vorgenannten Proteasen eine stabile Suspension erhalten werden, die keinen bitteren Beigeschmack aufweist. Ferner kann durch die Kombination der beiden vorgenannten Proteasen die Gesamtmenge an Protease reduziert werden.

Demnach stellt die Erfindung ferner vorzugsweise eine Futterzusammensetzung, insbesondere für Haustiere, bereit, enthaltend
a. 40 bis 80 Gew.-%, bevorzugt 50 bis 75 Gew.-%, weiter bevorzugt 55 bis 75 Gew.-%, weiter bevorzugt 55 bis 70 Gew.-%, weiter bevorzugt 60 bis 70 Gew.-%, am bevorzugtesten 60 bis 65 Gew.-%, bezogen auf das Gesamtgewicht der Futterzusammensetzung, tierische Proteinquelle;
b. Wasser;
c. eine Protease, die bei einem pH von 6 bis 9 aktiv ist, bevorzugt ihr Aktivitätsmaximum bei einem pH von 7 bis 8 aufweist, und eine Protease, die bei einem pH von 4 bis 9 aktiv ist, bevorzugt ihre Aktivitätsmaximum bei einem pH von 6 bis 7 aufweist,
wobei die Futterzusammensetzung als Suspension vorliegt.

Als Proteasen kommen verschiedene Proteasen in Betracht. Vorzugsweise werden Endoproteasen eingesetzt. Endoproteasen sind Proteasen, die Peptidbindungen innerhalb eines Peptids spalten. Proteine umfassen insbesondere lange Peptide oder bestehen daraus. Peptide umfassend 2 bis 20 Aminosäuren können auch als Oligopeptide bezeichnet werden. Endoproteasen können spezifisch für eine bestimmte Aminosäurenabfolge sein oder sie können unspezifisch sein. Bei Einsatz von unspezifischen Endoproteasen werden andere Proteine und Peptide an vielen Stellen zu Oligopeptiden gespalten. Vorzugsweise enthält die Futterzusammensetzung Endoprotease, besonders bevorzugt ist die in der Futterzusammensetzung enthaltene(n) Protease(n) Endoprotease(n).

Ferner verfügen Proteasen über ein aktives Zentrum, in dem die eigentliche Spaltung stattfindet. Hierbei sind verschiedene Arten von aktiven Zentren bekannt wie Serin-Proteasen, Cystein-Proteasen, Aspartat-Proteasen, Metallo-Proteasen und Threonin-Proteasen.

Beispiele für Proteasen umfassen Papain, Bromelain, Ficin, α-Chymotrypsin, Thermolysin, Proteinase K und Pronase K.

Gemäß einer Ausführungsform ist die mindestens eine Protease eine Protease, die im neutralen pH-Bereich, insbesondere bei einem pH von 6 bis 9, aktiv ist und ausgewählt aus der Gruppe bestehend aus Serin-Proteasen, Cystein-Proteasen, Aspartat-Proteasen, Metallo-Proteasen und Threonin-Proteasen. Eine geeignete Protease ist beispielsweise Corolase 7089, die von der Firma AB Enzymes vertrieben wird.

Gemäß einer weiteren Ausführungsform enthält die Futterzusammensetzung eine Protease, die im sauren pH-Bereich, insbesondere bei einem pH von 4 bis 6, aktiv ist und ausgewählt ist aus der Gruppe bestehend aus Serin-Proteasen, Cystein-Proteasen, Aspartat-Proteasen, Metallo-Proteasen und Threonin-Proteasen sowie Papain. Die Proteasen, die im sauren Bereich aktiv sind, können grundsätzlich auch bei höheren pH Werten wie 7 bis 9 noch aktiv sein. Vorzugsweise weisen Proteasen, die im sauren Bereich aktiv sind, aber ihr Aktivitätsmaximum eher im sauren Bereich, beispielsweise bei pH Werten von 6 bis 7 auf.

Gemäß einer weiteren Ausführungsform ist die mindestens eine Protease eine Cystein-Protease, insbesondere Papain.

Vorzugsweise haben die in der Futterzusammensetzung eingesetzte(n) Protease(n) ihre maximale Aktivität in einem Temperaturbereich von 40 bis 70 °C, bevorzugt von 50 bis 65 °C.

Mit diesen Proteasen können Futterzusammensetzungen, insbesondere mit einem hohen Proteingehalt, erhalten werden, die als Suspension vorliegen, wobei die Suspension stabil ist und die enthaltenen Peptide gut resorbiert werden können.

Die Futterzusammensetzung kann ferner einen oder mehrere Zusatzstoffe enthalten. Diese Zusatzstoffe können in Haupt- und Nebenzusatzstoffe eingeteilt werden.

Die Futterzusammensetzung kann einen oder mehrere Hauptzusatzstoffe ausgewählt aus der Gruppe bestehend aus Algen, beispielsweise Chlorella oder Spirulina, Kräuter, beispielsweise Brennessel, Löwenzahn, Petersilie, Teufelskralle, Schachtelhalm, Fenchel, Melisse, Taigawurzel, Gingko, Ginseng, Ingwer, Kamille, Sanddorn, Weidenrinde oder Weißdorn, Superfoods, beispielsweise Acai-Beere, Acerola, Aloe Vera, Amaranth, Aronia, Baobab, Camu-Camu, Chia-Samen, Curcuma, Gerstenmalz, Goji-Beere, Granatapfel, Leinsamen, Maca, Bockshornkleesamen, Moringa oder Propolis, Nutraceuticals, beispielsweise Grünlippmuschel, Kieselerde, Bentonit, Zeolith, Beta-Glucan, Chondroitinsulfat, Glucosamin, Inulin, Methylsulfonylmethan oder Aminosäuren, Fischöle, beispielsweise Lachsöl, und pflanzliche Öle, beispielsweise Distelöl, Kokosöl, Sonnenblumenöl, Leinöl, Mandelöl oder Rapsöl, Geflügelextrakt und Ballaststoffe, enthalten.

Ferner kann die Futterzusammensetzung einen oder mehrere Nebenzusatzstoffe ausgewählt aus der Gruppe bestehend aus Vitaminen, Spurenelementen, Mineralien, Stabilisatoren, Verdicker, Säureregulatoren und Antioxidationsmittel enthalten.

Beispiele für Stabilisatoren sind Bienenwachs, Emulgatoren wie Lecithin aus Sonnenblumenöl oder Citronensäureester von Mono- und Diglyceriden, Calciumsulfat, Reismehl, Feuchthaltemittel wie Glycerin, Polydextrose, Geliermittel, Schaumverhüter sowie Mischungen hiervon.

Beispiele für Verdicker sind Cellulosederivate, Johannisbrotmehl, Xanthan, Stärke, Gelatine, Alginsäure, Alginate, Carrageen, Guarkernmehl, Gellan, Pektin, sowie Mischungen hiervon.

Beispiele für Säureregulatoren sind Calciumcarbonat, Natriumcarbonat, Milchsäure, Äpfelsäure, Fumarsäure, Lactate, Citronensäure, Citrate, Weinsäure, Tartrate, Orthophosphate, Malate, Diphosphate, Triphosphate, Polyphosphate wie Natriumtripolyphosphat, Carbonate, Salzsäure, Chloride, Sulfate, Hydroxide, Oxide wie Magnesiumoxid, Adipate, Gluconsäure, Gluconate, sowie Mischungen hiervon.

Beispiele für Antioxidationsmittel sind Vitamin C, Tocopherol, Gallate, tert-Butylhydrochinon, Butylhydroxyanisol, Butylhydroxytoluol, Rosmarinextrakt, sowie Mischungen hiervon.

Die Futterzusammensetzung enthält den oder die Hauptzusatzstoffe vorzugsweise in einer Menge von bis zu 20 Gew.-%, bevorzugt von 1 bis 18 Gew.-%, weiter bevorzugt von 5 bis 18 Gew.-%, jeweils bezogen auf das Gesamtgewicht der Futterzusammensetzung.

Die Futterzusammensetzung enthält den oder die Nebenzusatzstoffe vorzugsweise in einer Menge von bis zu 10 Gew.-%, bevorzugt von 0,5 bis 8 Gew.-%, weiter bevorzugt von 1 bis 6 Gew.-%, jeweils bezogen auf das Gesamtgewicht der Futterzusammensetzung.

Mit den Haupt- und Nebenzusatzstoffen kann die Futterzusammensetzung auf die Bedürfnisse verschiedener Tiere abgestimmt werden. Dabei kann eine Abstimmung sowohl im Hinblick auf verschiedene Tierarten als auch auf andere Bedürfnisse innerhalb einer Tierart, beispielsweise auf verschiedene Altersstufen oder auf Mangelerscheinungen, erfolgen.

Ferner können auch andere Eigenschaften wie die Konsistenz der Futterzusammensetzung mit Hilfe der Zusätze eingestellt werden.

Die Futterzusammensetzung liegt als Suspension vor. Vorzugsweise liegt die Futterzusammensetzung als stabile Suspension vor. Gemäß einer Ausführungsform weist die Futterzusammensetzung Teilchen mit einer mittleren Teilchengröße von kleiner als 500 µm, bevorzugt kleiner als 100 µm, weiter bevorzugt kleiner als 10 µm, auf. Unter der mittleren Teilchengröße wird insbesondere der D₅₀-Wert verstanden. Die mittlere Teilchengröße, insbesondere der D₅₀-Wert, kann beispielsweise mittels Laserbeugung bestimmt werden. Dabei können verdünnte Proben zum Einsatz kommen. Die mittlere Teilchengröße, insbesondere der D₅₀-Wert, kann mit einem Malvern Mastersizer 3000 bestimmt werden.

Vorzugsweise weist die Futterzusammensetzung die Konsistenz eines Smoothies auf. Insbesondere ist die Futterzusammensetzung fließfähig. Vorteilhafterweise weist die Futterzusammensetzung eine Viskosität, gemessen mit einem Brookfield Viskosimeter, insbesondere einem DV-II+ Pro Viscometer, mit der Spindel RV/HA/HB-3 bei 20°C und einer Scherrate von 50 s⁻¹ nach einer Messungslaufzeit von 1 Minute, von 100 mPas bis 10000 mPas, bevorzugt von 100 bis 5000 mPas, weiter bevorzugt von 500 bis 2500 mPas, auf. Die Spindel RV/HA/HB-3 hat eine Gesamtlänge von 13,5 cm und weist eine rechtwinklig zur Spindelachse angeordnete Scheibe mit einem Durchmesser von 3,5 cm auf. Die Scheibe ist dabei 2,5 cm vom unteren Ende der Spindel angeordnet so dass die Spindel also unterhalb der Scheibe einen 2,5 cm langen Dorn aufweist. Futterzusammensetzungen mit Viskositäten in den vorgenannten Bereichen wurden von Testtieren, insbesondere von Testhunden, gut akzeptiert.

Die Futterzusammensetzung ist insbesondere für Haustiere geeignet. Vorzugsweise ist die Futterzusammensetzung eine Futterzusammensetzung für Hunde oder Katzen, bevorzugt für Hunde.

Die Erfindung stellt ferner ein Verfahren zur Herstellung der erfindungsgemäßen Futterzusammensetzung bereit, umfassend die Schritte:
a. Zerkleinern einer tierischen Proteinquelle um eine zerkleinerte tierische Proteinquelle zu erhalten;
b. Einstellen der Temperatur der zerkleinerten tierischen Proteinquelle auf eine erste Temperatur;
c. Zugabe von Protease zur zerkleinerten tierischen Proteinquelle.

Die Verfahrensschritte können in beliebiger Reihenfolge durchgeführt werden. Bevorzugt werden sie in der angegebenen Reihenfolge durchgeführt.

Wie für die erfindungsgemäße Futterzusammensetzung erläutert, kann entsprechend im erfindungsgemäßen Verfahren eine oder mehr als eine tierische Proteinquelle eingesetzt werden. Dementsprechend können in Schritt a. eine oder mehrere tierische Proteinquellen zerkleinert werden. Für den Einsatz von mehr als einer tierischen Proteinquelle gilt das hierin, insbesondere das nachstehend, für eine tierische Proteinquelle Gesagte entsprechend. Ebenso können eine oder mehr als eine Protease, insbesondere zwei Proteasen, der zerkleinerten tierischen Proteinquelle zugegeben werden.

Das Zerkleinern der tierischen Proteinquelle kann auf verschiedene Art und Weise erreicht werden. Beispielsweise kann das Zerkleinern durch Wolfen, Kuttern oder Microcuttern erreicht werden. Vorzugsweise umfasst das Zerkleinern mindestens eines von Wolfen, Kuttern und Microcuttern. Durch Auswahl und/oder Kombination verschiedener Zerkleinerungsarten kann die tierische Proteinquelle auf die gewünschte Größe zerkleinert werden. Durch Zerkleinern auf eine geringe Größe wird eine größere Oberfläche für eine enzymatische Behandlung, insbesondere mit Protease, geschaffen. Dadurch kann eine optimale Enzymaktivität erzielt werden. Die enzymatische Behandlung kann eine Verflüssigung der tierischen Proteinquelle in der vorliegenden Futterzusammensetzung verursachen. Vorzugsweise umfasst das Zerkleinern der tierischen Proteinquelle Wolfen, Kuttern und Microcuttern, insbesondere in der angegebenen Reihenfolge. Vorteilhafterweise ist die tierische Proteinquelle beim Zerkleinern gekühlt oder tiefgefroren.

Um das Zerkleinern zu erleichtern, kann der tierischen Proteinquelle beim Zerkleinern vorzugsweise Wasser zugegeben werden.

Vorzugsweise wird im erfindungsgemäßen Verfahren das Umlaufverfahren eingesetzt. Weiter bevorzugt wird die zerkleinerte tierische Proteinquelle im Umlaufverfahren weiterverarbeitet. Insbesondere kann das Einstellen und/oder Halten einer oder mehrerer, insbesondere aller, Temperaturen nach dem Zerkleinern der tierischen Proteinquelle im Umlaufverfahren erfolgen. Das Einstellen und/oder Halten einer oder mehrerer, insbesondere aller, Temperaturen kann mittels Zugabe von Direktdampf, insbesondere mit einer Temperatur von 110 bis 150 °C, vorzugsweise von 120 bis 140 °C, weiter bevorzugt 130 °C, erfolgen. Mit dem Umlaufverfahren kann eine mögliche Phasentrennung, insbesondere von fetthaltigen Substanzen und Wasser vermieden werden.

Die Temperatur der zerkleinerten tierischen Proteinquelle wird vorzugsweise auf eine erste Temperatur von 40 bis 70 °C, bevorzugt von 45 bis 65 °C, weiter bevorzugt von 50 bis 65 °C, eingestellt. Vorzugsweise wird die zerkleinerte tierische Proteinquelle dazu erhitzt. Das Einstellen der Temperatur auf die erste Temperatur erfolgt vorzugsweise mittels Zugabe von Direktdampf, insbesondere im Umlaufverfahren. Der Direktdampf hat vorteilhafterweise eine Temperatur von 110 bis 150 °C, bevorzugt von 120 bis 140°C, weiter bevorzugt von 130 °C. Die erste Temperatur orientiert sich dabei insbesondere an der Temperatur für die optimale Aktivität der zugegebenen Protease(n). Auf diese Weise wird die Spaltung der in der tierischen Proteinquelle enthaltenen Proteine zu kleineren Peptiden begünstigt. Die Spaltung der Proteine in kleinere Peptide begünstigt die Stabilität der als Suspension vorliegenden Futterzusammensetzung. Vorzugsweise wird der zerkleinerten tierischen Proteinquelle nach dem Einstellen der Temperatur auf die erste Temperatur Protease zugegeben.

Nach dem Einstellen der Temperatur der zerkleinerten tierischen Proteinquelle auf die erste Temperatur und Zugabe von Protease kann die Temperatur für verschiedene Zeiträume bei der ersten Temperatur gehalten werden. Vorzugsweise wird die Temperatur für einen Zeitraum von 10 bis 60 Minuten, bevorzugt von 20 bis 30 Minuten, bei der ersten Temperatur gehalten. Vorzugweise wird also die Temperatur von zerkleinerter tierischer Proteinquelle mit Protease für einen Zeitraum von 10 bis 60 Minuten, bevorzugt von 20 bis 30 Minuten, bei der ersten Temperatur gehalten. Dadurch kann der Protease genügend Zeit zur Verfügung gestellt werden, um Proteine der zerkleinerten tierischen Proteinquelle zu spalten. Dabei wird vorzugsweise eine proteolysierte Mischung erhalten.

Somit umfasst das erfindungsgemäße Verfahren vorzugsweise die Schritte
a. Zerkleinern einer tierischen Proteinquelle um eine zerkleinerte tierische Proteinquelle zu erhalten;
b. Einstellen der Temperatur der zerkleinerten tierischen Proteinquelle auf eine erste Temperatur;
c. Zugabe von Protease zur zerkleinerten tierischen Proteinquelle;
d. Halten der Temperatur bei der ersten Temperatur, insbesondere für einen Zeitraum von 10 bis 60 Minuten, vorzugsweise von 20 bis 30 Minuten,
bevorzugt in der angegebenen Reihenfolge.

In einem weiteren Schritt, vorzugsweise nach dem Halten bei der ersten Temperatur, kann die Temperatur auf eine zweite Temperatur eingestellt werden. Die zweite Temperatur ist vorzugsweise höher als die erste Temperatur. Die proteolysierte Mischung kann also nach dem Halten bei der ersten Temperatur auf eine zweite Temperatur erhitzt werden. Vorzugsweise liegt die zweite Temperatur bei 75 °C oder höher, bevorzugt bei 80 °C oder höher, weiter bevorzugt in einem Bereich von 80 bis 90 °C, besonders bevorzugt von 82 bis 85 °C. Das Einstellen der Temperatur bzw. das Erhitzen auf die zweite Temperatur erfolgt vorzugsweise mittels Zugabe von Direktdampf, insbesondere im Umlaufverfahren. Der Direktdampf hat vorteilhafterweise eine Temperatur von 110 bis 150 °C, bevorzugt von 120 bis 140°C, weiter bevorzugt von 130 °C.

Die proteolysierte Mischung kann für verschiedene Zeiträume bei der zweiten Temperatur gehalten werden. Vorzugsweise wird die proteolysierte Mischung für einen Zeitraum von 10 bis 60 Minuten, bevorzugt von 20 bis 30 Minuten, bei der zweiten Temperatur gehalten. Dadurch kann die Protease inaktiviert werden. Dadurch wird vorzugsweise eine inaktivierte Mischung erhalten.

Somit umfasst das erfindungsgemäße Verfahren vorzugsweise die Schritte
a. Zerkleinern einer tierischen Proteinquelle um eine zerkleinerte tierische Proteinquelle zu erhalten;
b. Einstellen der Temperatur der zerkleinerten tierischen Proteinquelle auf eine erste Temperatur, vorzugsweise von 40 bis 70°C;
c. Zugabe von Protease zur zerkleinerten tierischen Proteinquelle;
d. Halten der Temperatur bei der ersten Temperatur, insbesondere für einen Zeitraum von 10 bis 60 Minuten, vorzugsweise von 20 bis 30 Minuten,
e. Einstellen der Temperatur auf eine zweite Temperatur, vorzugsweise von 80 bis 90 °C;
f. Halten der Temperatur bei der zweiten Temperatur, insbesondere für einen Zeitraum von 10 bis 60 Minuten, vorzugsweise von 20 bis 30 Minuten,
bevorzugt in der angegebenen Reihenfolge.

Wie für die erfindungsgemäße Futterzusammensetzung erläutert, kann entsprechend im erfindungsgemäßen Verfahren ein oder mehr als ein pflanzliches Nahrungsmittel zugegeben werden. Für den Einsatz von mehr als einem pflanzlichen Nahrungsmittel gilt das hierin, insbesondere das nachstehend, für pflanzliche Nahrungsmittel Gesagte entsprechend. Pflanzliche Nahrungsmittel können im erfindungsgemäßen Verfahren an verschiedenen Zeitpunkten zugegeben werden. Werden verschiedene pflanzliche Nahrungsmittel eingesetzt, können diese ebenfalls an verschiedenen Zeitpunkten zugesetzt werden. Vorzugsweise werden mehrere pflanzliche Nahrungsmittel zum gleichen Zeitpunkt zugegeben. Die Zugabe des pflanzlichen Nahrungsmittels kann vor oder nach der Zugabe von Protease erfolgen. Pflanzliches Nahrungsmittel kann nach dem Einstellen auf die erste Temperatur, nach dem Halten bei der ersten Temperatur, nach dem Einstellen auf die zweite Temperatur, oder nach dem Halten bei der zweiten Temperatur zugesetzt werden. Die Zugabe von pflanzlichem Nahrungsmittel erfolgt vorzugsweise nach der Zugabe von Protease. Pflanzliches Nahrungsmittel wird vorzugsweise der proteolysierten Mischung zugegeben. Vorzugsweise werden pflanzliche Nahrungsmittel vor der Zugabe zerkleinert, insbesondere gekuttert. Pflanzliche Nahrungsmittel können auch in Pulverform eingesetzt werden.

Hauptzusatzstoffe können an verschiedenen Zeitpunkten im erfindungsgemäßen Verfahren zugegeben werden. Werden verschiedene Hauptzusatzstoffe eingesetzt, können diese ebenfalls an verschiedenen Zeitpunkten zugesetzt werden. Hauptzusatzstoffe können nach dem Einstellen auf die erste Temperatur, nach dem Halten bei der ersten Temperatur, nach dem Einstellen auf die zweite Temperatur, oder nach dem Halten bei der zweiten Temperatur zugesetzt werden. Entsprechend können Hauptzusatzstoffe der tierischen Proteinquelle, der zerkleinerten tierischen Proteinquelle, der proteolysierten Mischung oder der inaktivierten Mischung zugegeben werden. Vorzugsweise wird der proteolysierten Mischung mindestens ein Hauptzusatzstoff zugegeben. Hauptzusatzstoffe werden vorzugsweise im Umlaufverfahren eingemischt.

Ebenso können Nebenzusatzstoffe an verschiedenen Zeitpunkten im erfindungsgemäßen Verfahren zugegeben werden. Werden verschiedene Nebenzusatzstoffe eingesetzt, können diese ebenfalls an verschiedenen Zeitpunkten zugesetzt werden. Nebenzusatzstoffe können nach dem Einstellen auf die erste Temperatur, nach dem Halten bei der ersten Temperatur, nach dem Einstellen auf die zweite Temperatur, oder nach dem Halten bei der zweiten Temperatur zugesetzt werden. Entsprechend können Nebenzusatzstoffe der tierischen Proteinquelle, der zerkleinerten tierischen Proteinquelle, der proteolysierten Mischung oder der inaktivierten Mischung zugegeben werden. Vorzugsweise wird der proteolysierten Mischung mindestens ein Nebenzusatzstoff zugegeben. Nebenzusatzstoffe werden vorzugsweise im Umlaufverfahren eingemischt.

Wasser kann im erfindungsgemäßen Verfahren direkt und/oder in Form von Kondensat zugegeben werden, beispielsweise bei Heizen mittels Dampf, insbesondere Direktdampf. Vorzugsweise wird Wasser in Form von Kondensat zugegeben.

Für die tierische Proteinquelle, das pflanzliche Nahrungsmittel, die Protease, die Hauptzusatzstoffe und die Nebenzusatzstoffe des erfindungsgemäßen Verfahrens gilt das vorstehend für die tierische Proteinquelle, das pflanzliche Nahrungsmittel, die Protease, die Hauptzusatzstoffe und die Nebenzusatzstoffe der erfindungsgemäßen Futterzusammensetzung Gesagte jeweils entsprechend.

Um ferner die Aktivität der Protease(n) zu gewährleisten, ist es vorteilhaft, den pH Wert im erfindungsgemäßen Verfahren einzustellen. Vorteilhafterweise wird der pH Wert im erfindungsgemäßen Verfahren auf einen Wert von 4 bis 9, insbesondere von 5 bis 7 eingestellt. Vorzugsweise weist die zerkleinerte tierische Proteinquelle vor Zugabe von Protease einen pH Wert von 4 bis 9, bevorzugt von 5 bis 7 auf. Vorzugsweise weist die zerkleinerte tierische Proteinquelle nach Zugabe von Protease einen pH Wert von 4 bis 9, bevorzugt von 5 bis 7 auf. Vorzugsweise weist die proteolysierte Mischung einen pH Wert von 4 bis 9, bevorzugt von 5 bis 7 auf. Vorzugsweise weist die inaktivierte Mischung einen pH Wert von 4 bis 9, bevorzugt von 5 bis 7 auf. Die angegebenen pH Werte gelten auch für den Fall, dass pflanzliche Nahrungsmittel, Hauptzusatzstoffe und/oder Nebenzusatzstoffe zugesetzt wurden.

Die inaktivierte Mischung kann ferner, insbesondere in einem weiteren Schritt, auf eine Temperatur von 121 °C bis 130 °C, insbesondere von 124°C bis 130°C, erhitzt werden. Dabei liegt vorzugsweise ein F₀-Wert von 8 bis 35 vor. Auf diese Weise kann eine Sterilisation der Futterzusammensetzung erreicht werden.

Gegenstand der Erfindung ist ferner eine nach dem erfindungsgemäßen Verfahren erhältliche Futterzusammensetzung.

Die Futterzusammensetzung kann als Ergänzungsfuttermittel oder als Alleinfuttermittel verwendet werden. Die Futterzusammensetzung wird vorzugsweise für Hunde oder Katzen, bevorzugt für Hunde, als Ergänzungsfuttermittel oder als Alleinfuttermittel eingesetzt.

Die Erfindung wird nachfolgend anhand von nicht limitierenden Ausführungsbeispielen näher beschrieben.

### BEISPIELE

### Inhaltsstoffe

Tierische Proteinquellen: Rindfleisch (RF), Geflügelleber(GL), separiertes Schweinefleisch (SSF), separiertes Geflügelfleisch (SGF), Schweineherzen (SH)
Pflanzliche Nahrungsmittel: Gemüsewürfel (GW), Früchtewürfel (FW)
Wasser (W)
Protease(n): Protease im Neutralbereich (NP), Protease im sauren Bereich (SP)
Hauptzusatzstoffe: Kräuter (KR), pflanzliche Öle (PÖ), Ballaststoffe (BS), Leinsamen (LS), Nutraceuticals (NC), Geflügelextrakt (GE)
Nebenzusatzstoffe: Verdicker (VD), Säureregulator (S), Vitamin- und Mineralienmischung (Nutrist, TMS-5)

### Generelle Verfahrensführung zur Herstellung erfindungsgemäße Futterzusammensetzungen

Bei der Herstellung der Futterzusammensetzung lagen die Inhaltsstoffe in Pulverform oder in flüssiger Form vor oder sie wurden zerkleinert. Die pflanzlichen Nahrungsmittel sowie die Ballaststoffe wurden jeweils zu Brei gekuttert und in einem Gebinde zusammengefasst. Die Haupt- und Nebenzusatzstoffe wurden ebenfalls in einem Trockenstoffgebinde zusammengefasst mit Ausnahme der pflanzlichen Öle, die in einem eigenen Ölgebinde zusammengefasst wurden, sowie des Säureregulators, der ebenfalls ein Gebinde darstellte. Aus den tierischen Proteinquellen wurde durch aufeinanderfolgendes Wolfen, Kuttern sowie Zerkleinern im Microcut ein Brät hergestellt. Das Brät wurde mittels Zufuhr von Direktdampf bei 130 °C im Umlaufverfahren zunächst auf 55 °C erhitzt, woraufhin die Protease(n) zusammen mit dem Säureregulator zugegeben wurden. Die mit Protease(n) versetzte Mischung wurde anschließend für 20 Minuten bei einer Temperatur von 55 bis 65 °C im Umlaufverfahren gehalten, bevor die pflanzlichen Nahrungsmittel mit den Ballaststoffen, das Öl- sowie das Trockenstoffgebinde zugegeben wurden. Die so erhaltene Mischung wurde im Umlaufverfahren mittels Zufuhr von Direktdampf bei einer Temperatur von 130°C auf eine Temperatur von über 82°C erhitzt und anschließend für 20 Minuten bei dieser Temperatur im Umlaufverfahren gehalten. Im Anschluss erfolgte das Abfüllen in Dosen. Während der Herstellung der Futterzusammensetzung wurde der pH Wert überwacht. Der pH Wert lag während der Herstellung bei einem Wert von 6 bis 7.

Mit den Inhaltsstoffen wurden gemäß der voranstehenden Verfahrensführung die in den Tabellen 1 und 2 aufgeführten Zusammensetzungen 1-8 (Zus1, Zus2, Zus3, Zu4, Zus5, Zus6, Zus7, Zus8) hergestellt (angegebene Mengen in Gew.-%). Zusammensetzung 7 ist dabei eine nicht erfindungsgemäße Vergleichszusammensetzung, die ohne Einsatz einer Protease hergestellt wurde. Dennoch wurde Zusammensetzung 7 für 20 Minuten bei einer Temperatur von 55 bis 65 °C gehalten, um einen die Ergebnisse besser vergleichen zu können. Die in den Zusammensetzungen angegebene Menge an Wasser umfasst auch Kondensatwasser, das beim Heizen mittels Direktdampf in der Zusammensetzung verblieben ist.

**Tabelle 1**

| **Inhaltsstoff** | **Zus1** | **Zus2** | **Zus3** | **Zus4** | **Zus5** |
|---|---|---|---|---|---|
| RF | 29 | 29 | 45 | 29 | 45 |
| GL | 10 | 10 | 10 | 10 | 10 |
| SSF | 5 | 5 | - | 5 | - |
| SGF | 6 | 6 | - | 6 | - |
| SH | 5 | 5 | - | 5 | - |
| W | 23 | 28 | 28 | 28,3 | 28,3 |
| S | 0,5 | 0,5 | 0,5 | 0,5 | 0,5 |
| VD | 0,8 | 0,9 | 0,9 | 0,9 | 0,9 |
| NP | 0,8 | 0,8 | 0,8 | 0,4 | 0,4 |
| SP | - | - | - | 0,1 | 0,1 |
| TMS-5 | 2,5 | 2,5 | 2,5 | 2,5 | 2,5 |
| FW | 8 | 5 | 5 | 5 | 5 |
| GW | 8 | 5 | 5 | 5 | 5 |
| LS | 0,2 | 0,5 | 0,5 | 0,5 | 0,5 |
| NC | 0,3 | 0,3 | 0,3 | 0,3 | 0,3 |
| GE | 0,3 | 0,3 | 0,3 | 0,3 | 0,3 |
| KR | 0,1 | 0,1 | 0,1 | 0,1 | 0,1 |
| PÖ | 0,5 | 0,5 | 0,5 | 0,5 | 0,5 |
| BS | - | 0,6 | 0,6 | 0,6 | 0,6 |

**Tabelle 2**

| **Inhaltsstoff** | **Zus6** | **Zus7 (Comp)** | **Zus8** |
|---|---|---|---|
| RF | 29 | 29 | 45 |
| GL | 6 | 10 | 10 |
| SSF | 10 | 5 | - |
| SGF | 10 | 6 | - |
| SH | - | 5 | - |
| W | 25 | 28,7 | 24 |
| S | 0,5 | 0,5 | 0,4 |
| VD | 0,8 | 0,9 | 1,3 |
| NP | 0,8 | - | 0,4 |
| SP | 0,1 | - | 0,1 |
| TMS-5 | 2,5 | 2,5 | 2,5 |
| FW | 5 | 2 | 5 |
| GW | 8 | 8 | 8 |
| LS | 0,5 | 0,5 | 0,5 |
| NC | 0,3 | 0,3 | 0,7 |
| GE | 0,3 | 0,3 | 0,4 |
| KR | 0,1 | 0,1 | 0,1 |
| PÖ | 0,5 | 0,6 | 1,0 |
| BS | 0,6 | 0,6 | 0,6 |

Die Zusammensetzungen 1 bis 6 und 8 lagen nach der voranstehenden Verfahrensführung als Suspensionen vor. Insbesondere lagen die Viskositäten (gemessen mit einem Brookfield VD-II+ Pro Viscometer mit der Spindel RV/HA/HB-3 bei 20°C mit einer Scherrate von 50 s⁻¹ und nach einer Messungslaufzeit von 1 Minute) der Zusammensetzungen 1-6 und 8 im Bereich von 200 bis 2000 mPas und wiesen somit eine Viskosität auf, die der eines Smoothies entsprach. Zusammensetzung 7 hingegen lag nicht als Suspension vor und wies eine Viskosität von über 50000 mPas auf, welche deutlich über der eines Smoothies lag. Ferner entmischten sich die Zusammensetzungen 1 bis 6 und 8 nicht über einen Zeitraum von drei Monaten. Die Zusammensetzungen 1 bis 6 und 8 wiesen auch keinen bitteren Beigeschmack auf.

In einem weiteren Versuch wurde die Akzeptanz von Zusammensetzung 8 bei Testhunden sowie die Auswirkungen auf den Stuhl der Testhunde untersucht. Zehn Testhunden wurde fünf Tage lang jeweils eine Schüssel mit 350 g Zusammensetzung 8 angeboten. Die Ergebnisse der Akzeptanz- und Verträglichkeitsstudie sind in Tabelle 3 zusammengefasst.

**Tabelle 3: Ergebnisse der Akzeptanz- und Verträglichkeitsstudie**

| Hund Nr. | Verzehr Tag 1 [g]; (Stuhl^{a}) | Verzehr Tag 2 [g]; (Stuhl^{a}) | Verzehr Tag 3 [g]; (Stuhl^{a}) | Verzehr Tag 4 [g]; (Stuhl^{a}) | Verzehr Tag 5 [g]; (Stuhl^{a}) | Gesamtverzehr [g]; (Stuhl^{a}) |
|---|---|---|---|---|---|---|
| 1 | 200; (4) | 350; (3) | 350; (3) | 350; (3) | 344; (3) | 1594; (3) |
| 2 | 350; (5) | 350; (4) | 350; (4) | 350; (4) | 350; (4) | 1750; (4) |
| 3 | 350; (4) | 272; (4) | 120; (4) | 92; (4) | 154; (4) | 988; (4) |
| 4 | 98; (3) | 16; (0) | 74; (5) | 96; (3) | 176; (3) | 460; (3) |
| 5 | 350; (4) | 344; (4) | 350; (4) | 96; (3) | 350; (4) | 1490; (4) |
| 6 | 350; (2) | 350; (3) | 350; (3) | 350; (4) | 350; (3) | 1750; (3) |
| 7 | 142; (4) | 108; (3) | 92; (4) | 350; (4) | 132; (4) | 824; (4) |
| 8 | 45 (4) | 350; (4) | 270; (4) | 68; (5) | 350; (3) | 1083; (4) |
| 9 | 224 (4) | 350; (5) | 350; (0) | 252; (4) | 350; (4) | 1526; (3) |
| 10 | 334; (4) | 350; (3) | 350; (4) | 350; (4) | 350; (4) | 1734; (4) |
| Durchschnitt | 244; (4) | 284; (3) | 266; (4) | 235; (4) | 291; (4) | 1320; (4) |

| | | | | | | |
|---|---|---|---|---|---|---|
| ^{a} Es wurde die Konsistenz des Stuhls wie folgt bewertet: 0 = kein Stuhl; 1 = flüssigwässrig; 2 = flüssig-gelartig; 3 = halbgeformt; 4 = geformt; 5 = hart-trocken. | | | | | | |

Aus Tabelle 3 wird ersichtlich, dass die Zusammensetzung 8 von den Testhunden gut akzeptiert wurde und auch gut verträglich war. Im Durchschnitt fraßen Testhunde in der vorgegebenen Fütterungszeit von 30 Minuten 75% der Zusammensetzung und schieden einen geschmeidigen, aber geformten Stuhl aus.

## Patentansprüche

1. Futterzusammensetzung, insbesondere für Haustiere, enthaltend
a. tierische Proteinquelle;
b. Wasser;
c. mindestens eine Protease;
wobei die Futterzusammensetzung als Suspension vorliegt.

2. Futterzusammensetzung nach Anspruch 1, **dadurch gekennzeichnet, dass** die Futterzusammensetzung 40 bis 80 Gew.-%, insbesondere 45 bis 75 Gew.-% oder 45 bis 70 Gew.-% oder 45 bis 65 Gew.-%, oder 40 bis 80 Gew.-%, insbesondere 50 bis 75 Gew.-% oder 55 bis 75 Gew.-% oder 55 bis 70 Gew.-% oder 60 bis 70 Gew.-% oder 60 bis 65 Gew.-%, jeweils bezogen auf das Gesamtgewicht der Zusammensetzung, an tierischer Proteinquelle enthält.

3. Futterzusammensetzung nach Anspruch 1 oder 2, **dadurch gekennzeichnet, dass** die Futterzusammensetzung pflanzliches Nahrungsmittel enthält, insbesondere wobei die Futterzusammensetzung 5 bis 20 Gew.-% oder 7 bis 18 Gew-% oder 10 bis 16 Gew.-%, jeweils bezogen auf das Gesamtgewicht der Zusammensetzung, pflanzliches Nahrungsmittel enthält und/oder insbesondere wobei das pflanzliche Nahrungsmittel ausgewählt ist aus der Gruppe bestehend aus Reis, Weizen, Mais, Gerste, Apfel, Aprikose, Pfirsich, Banane, Mango, Cranberry, Heidelbeere, Johannisbeere, Hagebutten, Kürbis, Rote Beete, Karotte, Pastinake, Spinat, Brokkoli, Wirsing, Süßkartoffel, Rübenschnitzel, Chicoréewurzeln, Hafer, Erbsen, Kleie, grüne Bohnen, Blumenkohl, Gemüseschalen, Sojafasern und Mischungen davon.

4. Futterzusammensetzung nach einem der vorstehenden Ansprüche, **dadurch gekennzeichnet, dass** die Futterzusammensetzung 5 bis 45 Gew.-%, insbesondere 10 bis 45 Gew.-% oder 15 bis 45 Gew.-% oder 20 bis 40 Gew.-% oder 25 bis 35 Gew.-%, jeweils bezogen auf das Gesamtgewicht der Zusammensetzung, Wasser enthält.

5. Futterzusammensetzung nach einem der vorstehenden Ansprüche, **dadurch gekennzeichnet, dass** die Futterzusammensetzung 0,05 bis 3 Gew.-%, insbesondere 0,1 bis 2 Gew.-% oder 0,2 bis 1,5 Gew.-%, jeweils bezogen auf das Gesamtgewicht der Zusammensetzung, Protease enthält.

6. Futterzusammensetzung nach einem der vorstehenden Ansprüche, **dadurch gekennzeichnet, dass** die Futterzusammensetzung mindestens zwei Proteasen, insbesondere genau zwei Proteasen, oder drei oder mehr Proteasen, enthält.

7. Futterzusammensetzung nach einem der vorstehenden Ansprüche, **dadurch gekennzeichnet, dass** die Futterzusammensetzung mindestens eine Protease enthält, die bei einem pH von 6 bis 9 aktiv ist, insbesondere ihr Aktivitätsmaximum bei einem pH von 7 bis 8 aufweist, und/oder mindestens eine Protease enthält, die bei einem pH von 4 bis 9 aktiv ist, insbesondere ihr Aktivitätsmaximum bei einem pH von 6 bis 7 aufweist.

8. Futterzusammensetzung nach einem der vorstehenden Ansprüche, **dadurch gekennzeichnet, dass** die Futterzusammensetzung einen oder mehrere Hauptzusatzstoffe ausgewählt aus der Gruppe bestehend aus Algen, beispielsweise Chlorella oder Spirulina, Kräuter, beispielsweise Brennessel, Löwenzahn, Petersilie, Teufelskralle, Schachtelhalm, Fenchel, Melisse, Taigawurzel, Gingko, Ginseng, Ingwer, Kamille, Sanddorn, Weidenrinde oder Weißdorn, Superfoods, beispielsweise Acai-Beere, Acerola, Aloe Vera, Amaranth, Aronia, Baobab, Camu-Camu, Chia-Samen, Curcuma, Gerstenmalz, Goji-Beere, Granatapfel, Leinsamen, Maca, Bockshornkleesamen, Moringa oder Propolis, Nutraceuticals, beispielsweise Grünlippmuschel, Kieselerde, Bentonit, Zeolith, Beta-Glucan, Chondroitinsulfat, Glucosamin, Inulin, Methylsulfonylmethan oder Aminosäuren, Fischöle, beispielsweise Lachsöl, und pflanzliche Öle, beispielsweise Distelöl, Kokosöl, Sonnenblumenöl, Leinöl, Mandelöl oder Rapsöl, Geflügelextrakt und Ballaststoffe, enthält.

9. Futterzusammensetzung nach Anspruch 8, **dadurch gekennzeichnet, dass** die Futterzusammensetzung den oder die Hauptzusatzstoffe in einer Menge von bis zu 20 Gew.-%, insbesondere von 1 bis 18 Gew.-% oder von 5 bis 18 Gew.-%, jeweils bezogen auf das Gesamtgewicht der Futterzusammensetzung, enthält.

10. Futterzusammensetzung nach einem der vorstehenden Ansprüche, **dadurch gekennzeichnet, dass** die Futterzusammensetzung einen oder mehrere Nebenzusatzstoffe ausgewählt aus der Gruppe bestehend aus Vitaminen, Spurenelementen, Mineralien, Stabilisatoren, Verdicker, Säureregulatoren und Antioxidationsmittel enthält.

11. Futterzusammensetzung nach einem der vorstehenden Ansprüche, **dadurch gekennzeichnet, dass** die Futterzusammensetzung eine Viskosität, gemessen mit einem Brookfield Viskosimeter, insbesondere einem DV-II+ Pro Viscometer, mit der Spindel RV/HA/HB-3 bei 20 °C und einer Scherrate von 50 s⁻¹ nach einer Messungslaufzeit von 1 Minute, von 100 mPas bis 10000 mPas, insbesondere von 100 bis 5000 mPas oder von 500 bis 2500 mPas, aufweist

12. Verfahren zur Herstellung einer Futterzusammensetzung nach einem der Ansprüche 1 bis 11, umfassend die Schritte:
a. Zerkleinern einer tierischen Proteinquelle um eine zerkleinerte tierische Proteinquelle zu erhalten;
b. Einstellen der Temperatur der zerkleinerten tierischen Proteinquelle auf eine erste Temperatur;
c. Zugabe von Protease zur zerkleinerten tierischen Proteinquelle.

13. Verfahren nach Anspruch 12, **dadurch gekennzeichnet, dass** das Zerkleinern mindestens eines von Wolfen, Kuttern und Microcuttern umfasst.

14. Verfahren nach einem der Ansprüche 12 oder 13, **dadurch gekennzeichnet, dass** die Temperatur der zerkleinerten tierischen Proteinquelle auf eine erste Temperatur von 40 bis 70 °C, insbesondere von 45 bis 65 °C oder von 50 bis 60 °C, eingestellt wird.

15. Verfahren nach einem der Ansprüche 12 bis 14, **dadurch gekennzeichnet, dass** die Mischung für einen Zeitraum von 10 bis 60 Minuten, insbesondere von 20 bis 30 Minuten, bei der ersten Temperatur gehalten wird, um vorzugsweise eine proteolysierte Mischung zu erhalten.

16. Verfahren nach einem der Ansprüche 12 bis 15, **dadurch gekennzeichnet, dass** in einem weiteren Schritt die Temperatur auf eine zweite Temperatur eingestellt wird, die insbesondere höher ist als die erste Temperatur.

17. Verfahren nach einem der Ansprüche 12 bis 16, **dadurch gekennzeichnet, dass** pflanzliches Nahrungsmittel zugegeben wird, insbesondere nach der Zugabe von Protease; und/oder dass der proteolysierten Mischung pflanzliches Nahrungsmittel zugegeben wird.

18. Verfahren nach einem der Ansprüche 12 bis 17, **dadurch gekennzeichnet, dass** nach dem Halten bei der ersten Temperatur mindestens ein Hauptzusatzstoff gemäß Anspruch 8 und/oder mindestens ein Nebenzusatzstoff gemäß Anspruch 10 zugegeben werden und/oder dass der proteolysierten Mischung mindestens ein Hauptzusatzstoff gemäß Anspruch 8 und/oder mindestens ein Nebenzusatzstoff gemäß Anspruch 10 zugegeben werden.

19. Verfahren nach einem der Ansprüche 12 bis 18, **dadurch gekennzeichnet, dass** der pH Wert auf einen Wert von 4 bis 9, insbesondere von 5 bis 7 eingestellt wird und/oder dass die zerkleinerte tierische Proteinquelle, die proteolysierte Mischung und/oder die inaktivierte Mischung einen pH Wert von 4 bis 9, insbesondere von 5 bis 7 aufweist.

20. Verfahren nach einem der Ansprüche 12 bis 19, **dadurch gekennzeichnet, dass** die proteolysierte Mischung für einen Zeitraum von 10 bis 60 Minuten, insbesondere von 20 bis 30 Minuten, bei der zweiten Temperatur gehalten wird, um vorzugsweise eine inaktivierte Mischung zu erhalten.

21. Verfahren nach einem der Ansprüche 12 bis 20, **dadurch gekennzeichnet, dass** das Einstellen und/oder Halten einer oder mehrerer, insbesondere aller, Temperaturen im Umlaufverfahren erfolgt, und/oder dass das Einstellen und/oder Halten einer oder mehrerer, insbesondere aller, Temperaturen mittels Zugabe von Direktdampf, insbesondere mit einer Temperatur von 110 bis 150 °C, vorzugsweise von 120 bis 140 °C oder 130 °C, erfolgt.

22. Verfahren nach einem der Ansprüche 12 bis 21, **dadurch gekennzeichnet, dass** im Verfahren das Umlaufverfahren eingesetzt wird.

23. Futterzusammensetzung erhältlich nach einem der Ansprüche 12 bis 22.

24. Verwendung einer Futterzusammensetzung gemäß einem der Ansprüche 1 bis 11 oder 23 als Ergänzungsfuttermittel oder als Alleinfuttermittel, insbesondere für Hunde oder Katzen.
